# EUROPÄISCHE PATENTSCHRIFT

(11) **EP 2 196 823 B1**
(45) Veröffentlichungstag und Bekanntmachung des Hinweises auf die Patenterteilung: **15.06.2011**
(21) Anmeldenummer: 08021604.7
(22) Anmeldetag: 12.12.2008
(51) Int. Cl.: G01S 13/84, G01S 13/82

(54) **Verfahren zur Bestimmung der Entfernung zwischen zwei Objekten**
Method for determining the distance between two objects
Procédé de détermination de la distance entre deux objets

(43) Veröffentlichungstag der Anmeldung: 16.06.2010
(73) Patentinhaber: Lambda: 4 Entwicklungen GmbH, 22767 Hamburg (DE)
(72) Erfinder: Reimann, Rönne, 22769 Hamburg (DE)

(56) Entgegenhaltungen:
- WO-A-02/073562
- WO-A-2004/035357
- DE-A1- 10 038 346
- US-B1- 6 744 398
- MIZUI K ET AL: "Vehicle-to-vehicle 2-way communication and ranging system using spread spectrum technique: proposal of double boomerang transmission system" VEHICLE NAVIGATION AND INFORMATION SYSTEMS CONFERENCE, 1994. PROCEEDIN GS., 1994 YOKOHAMA, JAPAN 31 AUG.-2 SEPT. 1994, NEW YORK, NY, USA,IEEE, 31. August 1994 (1994-08-31), Seiten 153-158, XP010136540 ISBN: 978-0-7803-2105-2

## Beschreibung

Die vorliegende Erfindung betrifft ein Verfahren zur Bestimmung einer Entfernung zwischen einem ersten und einem zweiten Objekt, mittels zwischen dem ersten und dem zweiten Objekt übertragender elektromagnetischer Wellen, umfassend folgende Verfahren zur:
a) senden eines ersten Signals mit einer ersten Frequenz vom ersten Objekt aus
b) empfangen des ersten Signals am zweiten Objekt
c) senden eines zweiten Signals mit einer zweiten Frequenz vom zweiten Objekt aus
d) empfangen des zweiten Signals am ersten Objekt
e) ermitteln einer Frequenzdifferenz zwischen der ersten und der zweiten Frequenz und zur Verfügung stellen des Ergebnisses an eine Auswertungseinrichtung
f) ermitteln einer ersten Phasendifferenz zwischen dem ersten Signal am ersten Objekt und dem zweiten Signal am ersten Objekt und zur Verfügung stellen des Ergebnisses an die Auswertungseinrichtung

Wobei die Entfernung zwischen dem ersten und dem zweiten Objekt ermittelt wird, und eine Vorrichtung zur Durchführung dieses Verfahrens.

Aus der EP 1815267A1 eine Abstandsbestimmung bekannt, die jedoch allein auf der Messung von Signalrundlaufzeiten (zwischen erstem und zweitem Objekt und zurück) aufbaut. Dazu wird von jedem Objekt aus mindestens ein Signalrundlauf initiiert. Diese Art der Abstandsbestimmung eignet sich auf Grund des vergleichsweise großen (absoluten) Fehlers insbesondere für Abstände von etwa 10km und findet ihre Grenze der sinnvollen Anwendung im Bereich von einigen Metern. Darüber hinaus erfordert der zweite Signalrundlauf mehr Zeit und Energie als ein einzelner.

Ein auf dem gleichen Prinzip der Messung der Signalrundlaufzeit basierendes Verfahren ist auch aus der WO 2004035357 bekannt. Dort wird offenbart, Impulse unterschiedlicher Frequenzen zwischen zwei Objekten auszutauschen und durch Ermittlung der Zeitpunkte, zu denen die Impulse an einem Objekt zeitgleich auftreten, die Signalrundlaufzeit und dadurch die Entfernung zu bestimmen. Dadurch wird der Fehler der Messung reduziert.

Ein ähnliches, auch auf der Ermittlung der Signalrundlaufzeit basierendes Verfahren, ist aus der XP 010 136 540 bekannt. Sie offenbart, von einem Objekt ausgestrahlte Signale am zweiten zu reflektieren oder auch dort Signale zu erzeugen und die Signalrundlaufzeit zu messen und dadurch die Entfernung zu bestimmen.

Des Weiteren ist es bekannt, von einem ersten Objekt ein erstes Signal abzustrahlen und an einem zweiten Objekt zu empfangen und ausgehend von diesem zweiten Objekt ein Signal abzustrahlen, dessen Phase in einer bestimmten Beziehung zu der Phase der am zweiten Objekt empfangenen Welle steht. Dieses zweite Signal wird dann wiederum am ersten Objekt empfangen und bezüglich der Phasendifferenz zur am ersten Objekt ausgestrahlten Welle analysiert. Daraus lässt sich dann die Entfernung zwischen den Objekten errechnen.

Diese Verfahren sind jedoch mit zahlreichen Nachteilen behaftet. So führt die Verwendung eines lediglich am zweiten Objekt reflektierten Signals dazu, dass nur eine sehr geringe Signalstärke der reflektierten Welle zur Verfügung steht und das aufgrund der Reflektion an verschiedenen Objekten zahlreiche unterschiedliche Reflektionen auszuwerten sind.

Wird ein Verfahren angewandt, bei dem am zweiten Objekt eine Welle abgestrahlt wird, deren Phase in einer festen Beziehung zu der Phase der am zweiten Objekt empfangenen ersten Welle steht, so besteht das Problem, dass am zweiten Objekt zeitgleich empfangen und gesendet wird. Dies führt zu zahlreichen Problemen, da sich die einzelnen Felder überlagern, was die Messung negativ beeinflusst beziehungsweise die Trennung der einzelnen Signale, die im gleichen Band liegen und zwar unter umständen mit deutlich unterschiedlicher Stärke (Unterschiede von bis zu 100db sind keine Seltenheit), im Empfänger erschwert, teilweise sogar unmöglich macht. Des Weiteren ist die Erzeugung einer in der Phasenlage bestimmten Welle verhältnismäßig komplex und aufwendig.

Aus diesen Gründen wurden zahlreiche Verfahren entwickelt, die durch eine bestimmte Reihenfolge der Abstrahlung der verschiedenen Wellen versuchen, die Nachteile der einzelnen Verfahren möglichst gering zu halten. Dies führt jedoch im Allgemeinen zu einer größeren Komplexität der notwendigen Schaltungen und somit zu höheren Kosten und erhöhter Anfälligkeit bezüglich der Umwelteinflüsse wie beispielsweise Reflexionen an anderen Objekten.

Aufgabe dieser Erfindung ist es somit, auf einfache Weise eine Entfernungsbestimmung zwischen zwei Objekten zu ermöglichen, die die Nachteile der aus dem Stand der Technik bekannten Verfahren vermeidet, insbesondere ohne Reflexion arbeitet, keine feste Phasenbeziehung zwischen ersten und zweiten Signalen und kein gleichzeitiges Senden und Empfangen erfordert und auch im cm-Abstandsbereich gute Auflösung ermöglicht und mit einem Signalrundlauf auskommt.

Diese Aufgabe wird gelöst durch ein Verfahren gemäß Anspruch 1 beziehungsweise durch eine Vorrichtung gemäß Anspruch 15. Die Unteransprüche 2 bis 14 geben vorteilhafte Weiterbildungen an.

Das erfindungsgemäße Verfahren zeichnet sich dadurch aus, dass zur Bestimmung der Entfernung zwischen einem ersten und einem zweiten Objekt mittels zwischen dem ersten und dem zweiten Objekt übertragender elektromagnetischer Wellen folgende Verfahrensschritte durchgeführt werden:
a) senden eines ersten Signals mit einer ersten Frequenz vom ersten Objekt aus
b) empfangen des ersten Signals am zweiten Objekt
c) senden eines zweiten Signals mit einer zweiten Frequenz vom zweiten Objekt aus
d) empfangen des zweiten Signal am ersten Objekt
e) ermitteln einer Frequenzdifferenz zwischen der ersten und der zweiten Frequenz und zur Verfügung stellen des Ergebnisses an eine Auswertungseinrichtung
f) ermitteln einer ersten Phasendifferenz zwischen dem ersten Signal am ersten Objekt und dem zweiten Signal am ersten Objekt und zur Verfügung stellen des Ergebnisses an die Auswertungseinrichtung,
wobei die Entfernung zwischen dem ersten und dem zweiten Objekt ermittelt wird und mindestens eine zweite Phasendifferenz zwischen je einem ersten Signal am zweiten Objekt und je einem zweiten Signal am zweiten Objekt ermittelt und an die Auswertungseinrichtung übertragen und bei der Ermittlung der Entfernung verwendet wird.

Ein solches Verfahren basiert somit darauf dass ein erstes Signal vom ersten zum zweiten Objekt und ein zweites Signal vom zweiten zum ersten Objekt gesendet wird. Dabei ist jedoch die Phasenbeziehung zwischen dem ersten Signal und dem zweiten Signal vollkommen frei wählbar. Es ist lediglich erforderlich, dass diese Phasendifferenz ermittelt und zu der zur Bestimmung der Entfernung vorgesehenen Auswertungseinrichtung übermittelt wird. Dadurch ist es möglich, dieses Verfahren verhältnismäßig einfach zu realisieren. Denn die Ermittlung einer Phasendifferenz ist verhältnismäßig deutlich einfacher, als die Erzeugung eines Signals mit einer (relativ). vorbestimmten Phasenlage.

Des Weiteren ist es dadurch möglich, ein gleichzeitiges Vorhandensein des ersten und des zweiten Signals an einem Objekt zu verhindern, wodurch Überlagerung der einzelnen Felder vermieden wird und beim Empfang eine bessere Dynamik erzielt werden kann. Aus diesem Grund kann beispielsweise auf stark richtende Antennen verzichtet werden und eine Entfernungsmessung auch noch bei deutlich schwächeren oder abgeschwächten Signalen des anderen Objekts durchgeführt werden. Des Weiteren kann auch die Empfindlichkeit beziehungsweise die Dynamik der Empfangsvorrichtungen reduziert werden, was zu einem Kostenvorteil führt und auch Energie einzusparen hilft. Auch ermöglicht dies, die Fehleranfälligkeit zu reduzieren bzw. die Genauigkeit der Bestimmung der Entfernung zu erhöhen.

Das erfindungsgemäße Verfahren kann theoretisch problemlos eine Auflösung von einem Grad bezüglich der Phase erreichen. In der Praxis werden mindestens 3 bis 12 Grad erzielbar sein. Dies entspricht bei einer bevorzugten Wellenlänge von etwa 12cm einer Genauigkeit von 1 bis 4mm.

Dabei ist das empfindungsgemäße Verfahren keineswegs auf einen bestimmten Wellenlängenbereich oder eine Polarisation festgelegt. Viel mehr kann dieses Verfahren in einem beliebigen Wellenlängenbereich durch geführt werden. Auch kann die Übermittlung der mindestens einen zweiten Phasendifferenz zwischen je einem ersten Signal am zweiten Objekt und je einem zweiten Signal am zweiten Objekt an die Auswertungseinrichtung auf jede beliebige Art und Weise erfolgen. In Frage kommen beispielsweise eine Übertragung per Funk, Infrarot oder eine Verkabelung.

Durch unterschiedliche, insbesondere wechselnde, Ausrichtung der Antennen und insbesondere beim Einsatz von stark unterschiedlichen Frequenzen, kann es zu einer Beeinträchtigung des Messergebnisses durch eine Beeinflussung der Phasendifferenzbestimmung durch die Antennen kommen. Dieses Problem kann beispielsweise dadurch verringert beziehungsweise verhindert werden, dass die (relative) Ausrichtung der Antennen erfasst wird beziehungsweise konstant gehalten wird und/oder der Phasengang jeder verwendeten Antennen in Abhängigkeit von der Frequenz berücksichtigt werden.

Zur Erhöhung der Genauigkeit oder der Fehlertoleranz können die Verfahrensschritte a) bis f) beliebig oft durchlaufen werden. Dabei kann die Wiederholung bei unterschiedlichen ersten und/oder zweiten Frequenzen durchgeführt werden, was die Eindeutigkeit bzw. die Genauigkeit weiter erhöht. Vorteilhafterweise werden genau so viele zweite Phasendifferenzen zwischen je einem ersten Signal am zweiten Objekt und je einem zweiten Signal am zweiten Objekt übertragen, wie die Häufigkeit der Durchläufe der Verfahrensschritte a) bis f) beträgt.

Die Auswertungseinrichtung kann sowohl am ersten Objekt oder am zweiten Objekt oder an einem beliebigen anderen Ort angeordnet sein. Sie kann auch in einem der Objekte integriert sein. Auch kann die Auswertungseinrichtung in verschiedene Teile unterteilt werden und somit an unterschiedlichen örtlichen Positionen angeordnet werden. Dabei teilen sich dann die einzelnen Teile der Auswertungseinrichtung die Auswertungsschritte oder führen einige oder alle Auswertungsschritte mehrfach durch. Die Auswertung erfolgt nach bekannten physikalischen Gesetzmäßigkeiten. Dabei wird in der Auswertungseinrichtung in der Regel zunächst die Signallaufzeit ermittelt, aus der dann verhältnismäßig einfach die Entfernung errechnet werden kann, wenn das Medium, in dem die Messungen durchgeführt worden sind, bekannt ist.

Vorteilhafterweise wird die Bestimmung der Phasendifferenzen innerhalb, in Bezug auf einen ersten Referenzzeitpunkt, vorbestimmten Zeiträumen durchgeführt. Dies ermöglicht es, eine höhere Genauigkeit zu erzielen. Je kleiner diese Zeitintervalle bemessen sind, umso höher ist die erzielbare Genauigkeit, aus welchem Grund es besonders vorteilhaft ist, wenn diese Zeiträume als Zeitpunkte definiert werden.

Besonders vorteilhaft ist es, da sich dadurch besonders genaue Ergebnisse produzieren lassen, wenn das Produkt aus jedem der Zeiträume multipliziert mit der Differenz zwischen der entsprechenden ersten und zweiten Frequenz nicht größer ist als das Dreifache der zu erzielenden Messgenauigkeit der Phasendifferenzbestimmung.

Bei dem Produkt aus den Zeiträumen jeweils multipliziert mit der Differenz zwischen der entsprechenden ersten und zweiten Frequenz handelt es sich um den Phasenfehler, also um den Fehler, der bei der Bestimmung der Phasenlage zwischen erstem und zweitem Signal in Kauf genommen werden muss. Die zu erzielende Messgenauigkeit bezüglich der Phasendifferenzbestimmung ergibt sich zwangsläufig aus der avisierten Genauigkeit der Bestimmung der Entfernung zwischen dem ersten und dem zweiten Objekt.

Als besonders vorteilhaft hat es sich erwiesen, wenn dieser Phasenfehler nicht größer ist als 0,04 und wenn insbesondere die Differenz zwischen der entsprechenden ersten und zweiten Frequenz nicht größer ist als 0,0001 Promille in Bezug auf die erste Frequenz und insbesondere nicht größer ist als 500Hz.

Besonders vorteilhaft ist es, wenn gemäß Anspruch 4 das zweite Signal erst gesendet wird, wenn das erste Signal am zweiten Objekt ausgeklungen ist, das heißt dessen Feldstärke also zumindest deutlich kleiner ist als die maximale Feldstärke des ersten Signals am zweiten Objekt, insbesondere nur noch weniger als 5% dieser maximalen Feldstärke aufweist.

Bei einer solchen Ausgestaltung wird eine Überlagerung der Felder des ersten und des zweiten Signals vermieden, was zu einer Erhöhung der möglichen Genauigkeit beziehungsweise zu der Möglichkeit der Reduktion der Empfängerdynamik und/oder -empfindlichkeit bzw. der Erhöhung der Empfangsempfindlichkeiten führt.

Bevorzugt wird es, wenn gemäß Anspruch 5 die Verfahrensschritte a) bis f) n-mal durchlaufen werden, wobei n die Anzahl der Wiederholungen mindestens 2 beträgt. Vorfeilerhafterweise werden diese Wiederholungen mit unterschiedlichen ersten und unterschiedlichen zweiten Frequenzen durchgeführt, wobei vorteilerhafterweise mindestens 2 zweite, insbesondere n-zweite, Phasendifferenzen zwischen je einem ersten Signal am zweiten Objekt und je einem zweiten Signal am zweiten Objekt ermittelt und an die Auswertungseinrichtung übertragen und bei der Ermittlung der Entfernung verwendet werden. Die Wiederholung der Verfahrensschritte a) bis f) und die Übertragung von mehreren zweiten Phasendifferenzen führt zu einer Erhöhung der möglichen Genauigkeit. Dies beruht auf der Reduktion von Messfehlern durch statistische Auswertung beziehungsweise auf der Möglichkeit verschiedene Ausbreitungswege voneinander zu unterscheiden. Die lässt sich besonders gut realisieren, wenn bei den einzelnen Durchläufen unterschiedliche erste und unterschiedliche zweite Frequenzen verwendet werden. Besonders vorteilhaft ist es dabei genau so viele zweite Phasendifferenzen zu ermitteln und zu übertragen, wie die Verfahrensschritte a) bis f) durchlaufen werden. In diesem Fall erhält man pro einer ersten und einer zweiten Frequenz jeweils eine erste und eine zweite Phasendifferenz. Dies ermöglicht eine besonders gute Auswertung der Messergebnisse bezüglich der Entfernung zwischen dem ersten und dem zweiten Objekt.

Vorteilhaft ist es, wenn gemäß Anspruch 6 zur Ermittlung der Entfernung die Veränderung der Phasendifferenzen in Abhängigkeit von der Veränderung der Summe aus der entsprechenden ersten und zweiten Frequenz ermittelt wird. Zwar ist eine Ermittlung der Entfernung auch möglich, ohne diese Abhängigkeit zu berücksichtigen, doch kann durch die Berücksichtigung dieser Abhängigkeit eine besonders hohe Genauigkeit erreicht werden beziehungsweise eine besonders gute Vermeidung von Messergebnisverfälschungen aufgrund von Umwelteinflüssen, wie zusätzlichen Reflektionen, realisiert werden. Bevorzugt wird es, gemäß Anspruch 7 das Senden der ersten und/oder zweiten Signale innerhalb in Bezug auf einen zweiten Referenzzeitpunkt vorbestimmter Zeitintervalle, insbesondere Zeitintervalle von nicht mehr als 60µs, zu beginnen. Die möglichst genaue Festlegung des Starts der Ausstrahlung der ersten und/oder zweiten Signale kann dazu verwendet werden, dass jeweils empfangende Objekt so einzustellen bzw. die dort empfangenen Daten so vor auszuwerten, dass eine besonders genaue Bestimmung der Parameter, wie beispielsweise der relativen Phasenlage, möglich ist. Dadurch kann die Genauigkeit der Messung gesteigert werden. Besonders vorteilhaft ist es, wenn die Zeitintervalle, in der das Senden der ersten und/oder zweiten Signale begonnen wird auch in Bezug auf den Referenzzeitpunkt gemäß Anspruch 2 vorbestimmt sind. Dies ermöglicht eine weitere Steigerung der Genauigkeit der Entfernungsbestimmung.

Vorteilhaft kann es sein, wenn gemäß Anspruch 8 die ersten und zweiten Signale zueinander am zweiten Objekt nicht phasengleich sind. Zunächst kann ein erfindungsgemäßes Verfahren auf die Phasenübereinstimmung ohne Einbußen bezüglich der Messgenauigkeit verzichten. Des Weiteren kann durch einen Verzicht auf die Phasenübereinstimmung eine deutliche Vereinfachung der Erzeugung des zweiten Signals erreicht werden. In diesem Fall kann es natürlich vorkommen, dass die Signale zufällig bezüglich der Phase übereinstimmen. Darüber hinaus können durch eine Vermeidung der Phasenübereinstimmung negative Beeinflussungen der beiden Signale untereinander verringert bzw. vermieden werden.

Vorteilerhafterweise wird die Auswertungselektronik gemäß Anspruch 9 am ersten Objekt angeordnet. Im erfindungsgemäßen Verfahren wird die Bestimmung der Entfernung durch das Senden vom ersten Objekt aus begonnen. Aus diesem Grund kann es vorteilhaft sein, die Auswertungseinrichtung am oder innerhalb des ersten Objektes anzuordnen. Bei einer solchen Anordnung kann die Bestimmung der Entfernung dann auf einfache Weise auch durch die Auswerteeinrichtung initiiert werden.

Vorteilhafterweise wird der Verfahrensschritt e), die Ermittlung der Frequenzdifferenz zwischen der ersten und der zweiten Frequenz und das zur Verfügung stellen des Ergebnisses an einer Auswertungseinrichtung am ersten Objekt durchgeführt. Zwar ist es generell möglich diesen Verfahrensschritt an jedem oder an beiden Objekten durchzuführen, doch kann es besonders vorteilhaft sein, insbesondere dann, wenn auch die Auswertungseinrichtung am ersten Objekt angeordnet ist, diesen Verfahrensschritt e) am oder im ersten Objekt durchzuführen. Dadurch kann es möglich sein, die Übertragung an die Auswerteeinrichtung zu vereinfachen oder gegen Umwelteinflüsse besser zu sichern.

Besonders vorteilhaft kann es sein, zu mindestens eine Amplitude mit der ein erstes Signal am zweiten Objekt bzw. mit der ein zweites Signal am ersten Objekt empfangen wird an die Auswerteeinrichtung zu übertragen. Dadurch kann es möglich sein, eine höhere Genauigkeit bezüglich der Bestimmung der Entfernung zu erzielen, wenn eine Signalausbreitung auf mehreren Wegen möglich ist. Dies kann beispielsweise durch Reflektionen an weiteren Objekten der Fall sein.

Besonders vorteilhaft ist es gemäß Anspruch 12, wenn die Übertragung an die Auswerteeinrichtung unabhängig von dem ersten und dem zweiten Signal geschieht. Durch eine solche Wahl der separaten Übertragung kann eine höhere Genauigkeit erzielt werden, da die Übertragung von Informationen die Genauigkeit der Analyse der Entfernung bzw. der einzelnen Signale beeinträchtigt. Besonders vorteilhaft kann es sein, die Übertragung an die Auswertungseinrichtung über elektromagnetische Wellen durchzuführen.

Besonders vorteilhaft kann es sein, wenn die erste Frequenz jeweils, also bei jedem Durchlauf der Verfahrensschritte a) bis f), ungleich der jeweiligen zweiten korrespondierenden Frequenz ist. Dadurch lassen sich Umwelteinflüsse und die Beeinflussung der einzelnen Signale untereinander verringern.

Bevorzugterweise werden die ersten und zweiten Frequenzen so gewählt, dass sie innerhalb eines Frequenzintervalls von 2000 MHz bis 3000 MHz und/oder von 4 GHz bis 6 GHz, insbesondere innerhalb von 2400 MHz bis 2483,5 MHz und/oder von 4,9 GHz bis 5,875 GHz liegen. Diese Bereiche sind besonders geeignet, um das erfindungsgemäße Verfahren durchzuführen. Des Weiteren sind in diesen Bereichen RFID-Anwendungen anzutreffen, bei denen eine Bestimmung der Entfernung zwischen einzelnen Objekten auf besonders einfache Weise von besonders hoher Bedeutung ist. Dies basiert darauf, dass in RFID häufig nur wenig Energie und wenig Raum zur Verfügung steht und die einzelnen Objekte verhältnismäßig einfach zu produzieren sein müssen. Eine Bestimmung der Entfernung zwischen den einzelnen RFID-Objekten ist darüber hinaus von großer Bedeutung, da dadurch Prozesse besonders effizient gesteuert werden können.

Die erfindungsgemäße Vorrichtung beinhaltet ein erstes und zweites Objekt umfassend jeweils Mittel zum Senden und Empfangen von elektromagnetischen Wellen und Steuervorrichtungen zum Durchführen eines Verfahrens gemäß einer der Ansprüche 1 bis 14 sowie umfassend mindestens eine Auswerteeinheit und Mittel zur Übertragung der an die Auswerteeinheit verfahrungsgemäß zu übertragenden Mess- und/oder Berechnungsergebnisse.

Weitere Vorteile und Ausgestaltungsmöglichkeiten der vorliegenden Erfindungen sollen im Folgenden anhand eines Ausführungsbeispieles geschildert werden. Das Ausführungsbeispiel ist jedoch rein schematisch und keineswegs beschränkend. Auch lassen sich weitere Ausführungsformen durch den Fachmann leicht auffinden und an die gegebenen Anforderungen anpassen.

Die Schilderung orientiert sich dabei an den rein schematischen und skizzenhaften Figuren. Die Figuren zeigen im Einzelnen:
- Fig. 1:: schematische Darstellung des Verfahrensablaufs
- Fig. 2:: schematischer Aufbau eines Objekts.

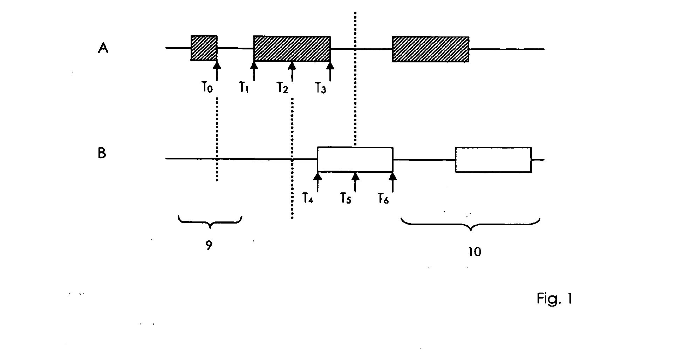

Figur 1 zeigt den schematischen Ablauf eines Teils des Verfahrens, eine Wiederholung der Schritte a) bis j). Dabei sind auf der oberen Achse die Verfahrensschritte dargestellt, die vom ersten Objekt A durchgeführt werden und auf der zweiten Achse die, die vom zweiten Objekt B durchgeführt werden. Zunächst sendet das erste Objekt A ein Synchronisationssignal aus, das durch das erste auf der Achse vorhandene Kästchen gekennzeichnet ist. Die Synchronisation 9 dient dazu, einen Referenzzeitpunkt to zu definieren. Dieser wird in diesem Ausführungsbeispiel definiert durch das Ende des ersten Signals des ersten Objekts A. Zu einem in Bezug auf den Referenzzeitpunkt t₀ festgelegten Zeitpunkt t₁ beginnt das erste Objekt A mit einer Ausstrahlung eines ersten Signals zu einem wiederum relativ zu dem Referenzzeitpunkt t₀ festgelegten Zeitpunkt t₂ empfängt das Objekt B das erste Signal und wertet dies bezüglich einer Phasendifferenz aus. Das erste Signal wird dabei ebenfalls vom ersten Objekt A empfangen und bezüglich einer Phasendifferenz ausgewertet. Zum Zeitpunkt t₃ endet die Ausstrahlung des ersten Signals des ersten Objekts A. Zu einem nach dem Zeitpunkt t₃ liegenden Zeitpunkt t₄, der ebenfalls in Bezug auf den Referenzzeitpunkt to vordefiniert ist, beginnt das zweite Objekt B mit der Ausstrahlung eines zweiten Signals. Zu einem ebenfalls in Bezug auf den Referenzzeitpunkt to vorbestimmten Zeitpunkt t₅ empfängt das erste Objekt A das zweite Signal und wertet dies bezüglich einer Phasendifferenz aus. Das zweite Signal wird zum Zeitpunkt t₅ ebenfalls vom zweiten Objekt B empfangen und bezüglich einer Phasendifferenz ausgewertet. Die Sendung des zweiten Signals endet mit dem Zeitpunkt t₆. Dieser ist ebenfalls in Bezug auf den Referenzzeitpunkt to definiert. Die bis zum Zeitpunkt t₆ oder im Anschluss daran ermittelten Frequenz-, Amplituden- und/oder Phasendifferenz-Werte werden nun an eine Auswertungseinheit übertragen. Im Anschluss daran findet eine Wiederholung 10 der Ausstrahlung von ersten und zweiten Signalen statt. Bei den ausgestrahlten ersten und zweiten Signalen handelt es sich um Wellen mit konstanter Frequenz und Amplitude.

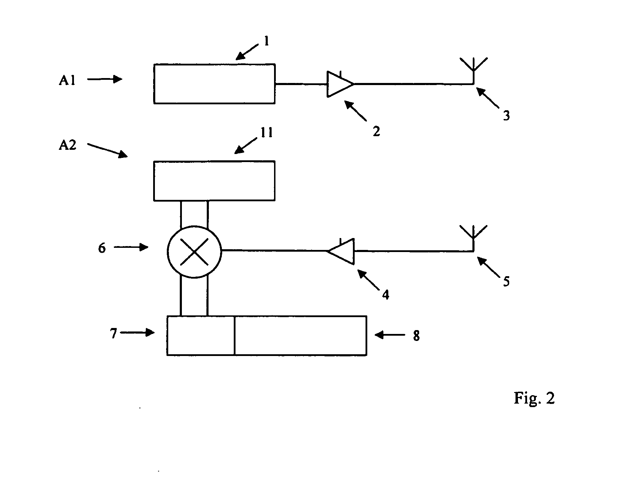

In Figur 2 ist der Aufbau eines ersten Objektes A gezeigt, wobei sich der Aufbau eines zweiten Objektes B genau so darstellen kann. Das gezeigte erste Objekt A beinhaltet einen Sendeteil A1 und einen Empfangsteil A2. Der Sendeteil A1 besteht aus einem ersten Oszillator 1, einem Verstärker 2 und einer Antenne 3.

Der Empfangsteil A2 beinhaltet einen zweiten Oszillator 11, einen Doppelmischer 6, einen Verstärker 4, eine zweite Antenne 5, einen A/D-Wandler 7 und einen Controller 8 darüber hinaus weist das Objekt A eine Kommunikationsvorrichtung, hier nicht gezeigt, auf, mit der das Objekt A mit einer Auswerteeinheit kommunizieren kann.

In Bezug auf das in Figur 1 geschilderte Verfahren, erzeugt der erste Oszillator 1 zunächst ein erstes Synchronisationssignal. Dieses Synchronisationssignal des ersten Oszillators 1 wird durch den ersten Verstärker 2 verstärkt und der Antenne 3 zu geleitet, durch die es dann abgestrahlt wird. Dieses erste Signal wird vom zweiten Objekt B empfangen und auch vom ersten Objekt A mit dem Empfangsteil A2 empfangen. Dabei wird das Signal durch die zweite Antenne 5 empfangen und an einen Verstärker 4 weiter geleitet. Das so empfangene Signal wird dann in Bezug auf eie Schwingung eines zweiten Oszillators 11 bezüglich der Phasenlage ausgewertet.

Dies geschieht mit Hilfe eines Doppelmischers 6, in dem die beiden Signale, das empfangene und das durch den zweiten Oszillator 11 erzeugte, zeitversetzt auf eine Zwischenfrequenz runter gemischt und die Phasenlage in der Zwischenfrequenz betrachtet und auf einen gemeinsamen Zeitpunkt hochgerechnet.

Der gleiche Empfangsvorgang, bei dem dann aber als empfangenes Signal das vom zweiten Objekt B abgestrahlte zweite Signal mit dem Signal des zweiten Oszillators 11 des ersten Objekts A verglichen wird, wird im Objekt A durchgeführt, wenn das zweite Objekt B ein zweites Signal ausstrahlt.

Analoge Vorgänge, abgesehen von Synchronisationssignalen, finden im zweiten Objekt B statt.

Der Phasenvergleich wird dabei insgesamt dadurch erreicht, dass das durch den Doppelmischer 6 erzeugte Signal durch den Analog-Digital-Wandler 7 umgewandelt und vom Controller 8 erfasst wird. Die Messergebnisse werden dann an eine Auswertungseinheit übertragen. Dort wird dann auf Basis der Messergebnisse eine Auswertung durchgeführt, die dann zu der Ermittlung einer Entfernung zwischen dem ersten Objekt A und dem zweiten Objekt B führt.

Weitere Abwandlungen dieses Ausführungsbeispieles und Anpassung an die jeweils konkret gestellte Aufgabe sind durch den Fachmann leicht aufzufinden. So ist beispielsweise sofort ersichtlich, dass die Oszillatoren 1 und 11 in einem einzigen Oszillator zusammengefasst werden können, um Bauteile zu sparen. Allerdings ist eine Kopplung zwischen den Oszillatoren 1 und 11 nicht notwendig.

Generell ist der Phasenjitter aller beteiligten Oszillatoren gering zu halten. In dem hier gezeigten Ausführungsbeispiel liegt der maximale Phasenjitter zwischen ein und drei Grad. Wichtig ist des Weiteren, dass alle beteiligten Oszillatoren 1, 11 für den Messzeitraum, je als Messzeitpunkt t₂, t₅ dargestellt, auf einer konstanten Frequenz eine stabile Welle erzeugen. Auch können beispielsweise die Antennen 3, 5 zu einer Antenne zusammengefasst werden, generell ist bei der Wahl der Anordnung der Antennen jedoch darauf zu achten, dass der Übertragungskanal zwischen den zum Senden und Empfangen verwendeten Antennen an einem Objekt konstant sein soll. Dies ist beispielsweise in der Regel dann gegeben wenn zwei dicht beieinander liegende Antennen 3, 5 verwendet werden.

Auch wenn das Ausführungsbeispiel an jedem Objekt zwei Antennen vorsieht und somit ein gleichzeitiges Senden und Empfangen erfolgt, so ist doch sofort ersichtlich, dass das Senden und Empfangen nicht mit den gleichen Bauteilen durchgeführt wird und auch nicht erforderlich ist. So wäre es problemlos möglich, dass vom ersten Oszillator 1 erzeugte Signal nicht erst abzustrahlen und wieder zu empfangen, also gleichzeitig zu senden und zu empfangen, sondern dieses Signal direkt vor oder hinter dem Verstärker 2 abzugreifen und zur Auswertung zu verwenden. Die im Ausführungsbeispiel gewählte Anordnung, bei der gleichzeitig gesendet und empfangen wird, macht nur besonders gut deutlich, dass das vorliegende Verfahren auf eine Kopplung zwischen dem ersten Oszillator 1 und dem zweiten Oszillator 11 in keiner Weise angewiesen ist. Die einzelnen Gruppen, Sendeeinheit A1 und Empfangseinheit A2 könnten somit theoretisch sogar bei konstanter Anordnung voneinander getrennt angeordnet werden.

### Bezugszeichenliste

- A: erstes Objekt
- B: zweites Objekt A1 Sendeteil des ersten Objekts
- A2: Empfangsteil des ersten Objekts

- 1: erster Oszillator
- 2: erster Verstärker
- 3: erste Antenne
- 4: zweiter Verstärker
- 5: zweite Antenne
- 6: Doppelmischer
- 7: Analog-Digital-Wandler
- 8: Controller
- 9: Synchronisation
- 10: Wiederholung
- 11: zweiter Oszillator

- t₀: Synchronisationszeitpunkt
- t₁: Beginn der Abstrahlung des ersten Signals
- t₂: Messzeitpunkt des ersten Signals
- t₃: Ende der Abstrahlung des ersten Signals
- t₄: Beginn der Abstrahlung des zweiten Signals
- t₅: Messzeitpunkt des zweiten Signals
- t₆: Ende der Abstrahlung des zweiten Signals

## Patentansprüche

1. Verfahren zur Bestimmung einer Entfernung zwischen einem ersten Objekt (A) und einem zweiten Objekt (B), mittels zwischen dem ersten und dem zweiten Objekt übertragender elektromagnetischer Wellen, umfassend folgende Verfahrensschritte:
a) Senden eines ersten Signals mit einer ersten Frequenz vom ersten Objekt aus
b) Empfangen des ersten Signals am zweiten Objekt
c) Senden eines zweiten Signals mit einer zweiten Frequenz vom zweiten Objekt aus
d) Empfangen des zweiten Signals am ersten Objekt
e) Ermitteln einer Frequenzdifferenz zwischen der ersten und der zweiten Frequenz und zur Verfügung stellen des Ergebnisses an eine Auswertungseinrichtung
f) Ermitteln einer ersten Phasendifferenz zwischen dem ersten Signal am ersten Objekt und dem zweiten Signal am ersten Objekt und zur Verfügung stellen des Ergebnisses an die Auswertungseinrichtung,
wobei die Entfernung zwischen dem ersten und dem zweiten Objekt ermittelt wird, **dadurch gekennzeichnet, dass**
mindestens eine zweite Phasendifferenzen zwischen je einem ersten Signal am zweiten Objekt und je einem zweiten Signal am zweiten Objekt ermittelt und an die Auswertungseinrichtung übertragen und bei der Ermittlung der Entfernung verwendet werden.

2. Verfahren nach Anspruch 1, **dadurch gekennzeichnet, dass** die Phasendifferenzen innerhalb in Bezug auf einen ersten Referenzzeitpunkt (t₀) vorbestimmter Zeiträume, insbesondere zu in Bezug auf einen ersten Referenzzeitpunkt vorbestimmten Zeitpunkten (t₂,t₅), ermittelt werden.

3. Verfahren nach Anspruch 2, **dadurch gekennzeichnet, dass** das Produkt aus jedem Zeitraum multipliziert mit der Differenz zwischen der entsprechenden ersten und zweiten Frequenz also der Phasenfehler nicht größer ist als das 3-fache der zu erzielenden Messgenauigkeit der Phasendifferenzbestimmung, insbesondere nicht größer ist als 0,04 und insbesondere die Differenz zwischen der entsprechenden ersten und zweiten Frequenz nicht größer ist als 0,0001 Promille in Bezug auf die erste und/oder zweite Frequenz, insbesondere nicht größer ist als 500Hz.

4. Verfahren nach einem der vorstehenden Ansprüche **dadurch gekennzeichnet, dass** das zweite Signal erst gesendet wird, wenn das erste Signal am zweiten Objekt ausgeklungen ist.

5. Verfahren nach einem der vorstehenden Ansprüche, **dadurch gekennzeichnet, dass** die Verfahrensschritte a) bis f) n-mal, wobei n mindestens 2 beträgt, mit unterschiedlichen ersten und unterschiedlichen zweiten Frequenzen durchgeführt und mindestens zwei zweite, insbesondere n zweite, Phasendifferenzen zwischen je einem ersten Signal am zweiten Objekt und je einem zweiten Signal am zweiten Objekt ermittelt und an die Auswertungseinrichtung übertragen und bei der Ermittlung der Entfernung verwendet werden.

6. Verfahren nach einem der vorstehenden Ansprüche, **dadurch gekennzeichnet, dass** zur Ermittlung der Entfernung die Veränderung der Phasendifferenzen in Abhängigkeit von der Veränderung der Summe aus der entsprechenden ersten und zweiten Frequenz ermittelt wird.

7. Verfahren nach einem der vorstehenden Ansprüche, **dadurch gekennzeichnet, dass** das Senden der ersten und/oder zweiten Signale innerhalb in Bezug auf einen zweiten Referenzzeitpunkt vorbestimmter Zeitintervalle, insbesondere Zeitintervalle von nicht mehr als 60µs, begonnen wird, wobei insbesondere der erste Referenzzeitpunkt (t₀) gleich dem zweiten Referenzzeitpunkt ist.

8. Verfahren nach einem der vorstehenden Ansprüche, **dadurch gekennzeichnet, dass** die zweiten Signale am zweiten Objekt nicht phasengleich zu den jeweils korrespondierenden ersten Signalen erzeugt werden.

9. Verfahren nach einem der vorstehenden Ansprüche, **dadurch gekennzeichnet, dass** die Auswertungseinrichtung im ersten Objekt angeordnet ist.

10. Verfahren nach einem der vorstehenden Ansprüche, **dadurch gekennzeichnet, dass** Verfahrensschritt e) am oder im ersten Objekt durchgeführt wird.

11. Verfahren nach einem der vorstehenden Ansprüche, **dadurch gekennzeichnet, dass** mindestens eine Amplitude mit der ein erstes Signal am zweiten Objekt und/oder mit der ein zweites Signal am ersten Objekt empfangen wird an die Auswertungseinrichtung übertragen wird.

12. Verfahren nach einem der vorstehenden Ansprüche, **dadurch gekennzeichnet, dass** die Übertragung an die Auswertungseinrichtung unabhängig von dem ersten und dem zweiten Signal geschieht und insbesondere über elektromagnetische Wellen durchgeführt wird.

13. Verfahren nach einem der vorstehenden Ansprüche, **dadurch gekennzeichnet, dass** die erste Frequenz jeweils ungleich der zweiten Frequenz ist.

14. Verfahren nach einem der vorstehenden Ansprüche, **dadurch gekennzeichnet, dass** die ersten Frequenzen und die zweiten Frequenzen innerhalb des Frequenzintervalls von 2000 MHz bis 3000 MHz oder von 4 GHz bis 6GHz, insbesondere innerhalb von 2400 MHz bis 2483.5 MHz oder von 4,900 GHz bis 5,875 GHz liegen.

15. Vorrichtung beinhaltend ein erstes und ein zweites Objekt sowie mindestens eine Auswerteeinheit, wobei diese Objeckte jeweils Mittel zum Senden und Empfangen von elektromagnetischen Wellen und Steuervorrichtungen zum Durchführen eines Verfahrens gemäß einem der Ansprüche 1 bis 14 sowie Mittel zur Übertragung der an die Auswerteeinheit verfahrensgemäß zu übertragenden Mess- und/oder Berechnungsergebnisse umfassen.

## Claims

1. Method for determining a distance between a first object (A) and a second object (B) by means of electromagnetic waves transmitting between said first and said second object comprising the following method steps:
a) Emitting a first signal with a first frequency from said first object
b) Receiving said first signal at said second object
c) Emitting a second signal with a second frequency from said second object
d) Receiving said second signal at said first object
e) Determining a frequency difference between said first and said second frequencies and providing the result to an evaluation device
f) Determining a first phase difference between said first signal at said first object, and said second signal at said first object, and providing the result to said evaluation device,
wherein the distance between said first and said second object is determined,
**characterized in that**
at least one second phase difference between a first signal at said second object and a second signal at said second object is determined respectively, is transmitted to said evaluation device and is used in determining said distance.

2. Method according to claim 1, **characterized in that** said phase differences are determined within predetermined time periods, which are predetermined with respect to a first reference time (t0), in particular with respect to predetermined times (t2, t5), which are predetermined with respect to a first reference time.

3. Method according to claim 2, **characterized in that** the product of each of said time periods multiplied by the difference between the corresponding first and second frequencies, i.e. the phase error, does not exceed 3 times the desired accuracy of the phase difference determination, and in particular does not exceed 0.04, and **in that** especially the difference between the corresponding first and second frequencies does not exceed 0.0001 per mill with respect to the first and/or second frequencies, in particular does not exceed 500Hz.

4. Method according to one of the preceding claims, **characterized in that** said second signal is transmitted only when said first signal at said second object has faded away.

5. Method according to one of the preceding claims, **characterized in that** method steps a) to f) are carried out n-times, where n amounts to at least 2, with different first and different second frequencies, and at least two second, in particular n second phase differences between a respective first signal at said second object and a respective second signal at said second object are determined respectively and transmitted to said evaluation device, and are used in the determination of said distance.

6. Method according to one of the preceding claims, **characterized in that** for determining the distance, the change in the phase differences is determined depending on the change in the sum of the corresponding first and second frequencies.

7. Method according to one of the preceding claims, **characterized in that** the transmission of said first and/or said second signals is started within predetermined time intervals, predetermined with reference to a second reference time, in particular within time intervals of no more than 60 ms, said first reference time (t0) particularly being equal to said second reference time.

8. Method according to one of the preceding claims, **characterized in that** said second signals at said second object are not generated in phase with each of said corresponding first signals.

9. Method according to one of the preceding claims, **characterized in that** said evaluation device is arranged in said first object.

10. Method according to one of the preceding claims, **characterized in that** method step e) is carried out on or in said first object.

11. Method according to one of the preceding claims, **characterized in that** at least one amplitude, with which one first signal is received at said second object and/or one second signal is received at said first object, is transmitted to said evaluation device.

12. Method according to one of the preceding claims, **characterized in that** the transmission to said evaluation device is performed independently of said first and said second signals, and is particularly carried out by way of electromagnetic waves.

13. Method according to one of the preceding claims, **characterized in that** each first frequency does not equal said second frequency respectively.

14. Method according to one of the preceding claims, **characterized in that** said first frequencies and said second frequencies are within the frequency range from 2000 MHz to 3000 MHz or from 4 GHz to 6 GHz, especially from 2400 MHz to 2483.5 MHz or from 4,900 GHz to 5,875 GHz.

15. Device comprising a first and a second object, as well as at least one evaluation unit, wherein each of said objects comprises means for emitting and receiving electromagnetic waves and control devices for carrying out a method according to one of claims 1 to 14, and means for transmitting the measurement and/or calculation results to be transmitted to the evaluation unit.

## Revendications

1. Méthode pour la détermination d'une distance entre un premier objet (A) et un deuxième objet (B) par moyen d'ondes électromagnétiques transmettantes entre ledit premier et ledit deuxième objet, comprenant les étapes suivantes:
a) Emission d'un premier signal avec une première fréquence à partir dudit premier object
b) Réception dudit premier signal audit deuxième objet
c) Emission d'un deuxième signal avec une deuxième fréquence à partir dudit deuxième objet
d) Réception dudit deuxième signal audit premier objet
e) Détermination d'une différence de fréquence entre ladite première et ladite deuxième fréquence et fourniture du résultat à des moyens d'évaluation
f) Détermination d'une première différence de phase entre ledit premier signal audit premier objet et dudit deuxième signal audit premier objet et fourniture du résultat auxdits moyens d'évaluation,
la distance entre le premier et le deuxième objet étant determinée,
characterérisée en ce qu'
au moins une deuxième différence de phase entre un premier signal audit deuxième objet et un deuxième signal audit deuxième objet est determinée respectivement et est transmise aux moyens d'évaluation et est utilisée pour la détermination de distance.

2. Méthode selon revendication 1, charactérisée en ce que lesdites différences de phases sont déterminées dans une période qui est prédéterminée en relation à un premier temps de référence (t0), particulièrement en relation à des temps (t2, t5) qui sont prédéterminées en relation à un premier temps de référence.

3. Méthode selon revendication 2, charactérisée en ce que le produit de chaque période multiplié avec la différence entre la première et la deuxième fréquence correspondante, donc l'érreur de phase, n'est pas plus grand que le triple de la précision de mesure à obtenir dans la détermination de la différence de phases, en particulier n'est pas plus grand que 0,04, et en particulier la différence entre la première et la deuxième fréquence correspondante n'est pas plus grande que 0,0001 pour mille en relation à la première et/ou deuxième fréquence, en particulier n'est pas plus grand que 500Hz.

4. Méthode selon une des revendications pécédentes, characterisée en ce que ledit deuxième signal n'est émis, que quand ledit premier signal audit deuxième objet s'est terminé.

5. Méthode selon une des revendications précédentes, characterisée en ce que les étapes de la méthode a) à f) sont effectuées n fois, n étant au moins 2, avec des premières fréquences différentes et des deuxièmes fréquences différentes, et qu' au moins deux deuxièmes, en particulier n deuxièmes différences de phase entre un premier signal audit deuxième objet et un deuxième signal audit deuxième objet sont déterminées et transmises aux moyens d'évaluation et sont utilisées dans la détermination de distance.

6. Méthode selon une des revendications précédentes, characterisée en ce que pour la détermination de ladite distance le change des différences de phase est déterminé en dépendence du change de la somme de la première et deuxième fréquence corresondante.

7. Méthode selon une des revendications précédentes, characterisée en ce que l'émission des premiers et/ou deuxièmes signaux est entamée dans des intervalles de temps prédéterminés, étant prédéterminés en relation à un deuxième temps de référence, en particulier des intervalles de temps ne pas excédant 60µs, le premier temps de référence (t0) particulièrement étant égale au deuxième temps de référence.

8. Méthode selon une des revendications précédentes, characterisée en ce que les deuxièmes signaux audit deuxième objet ne sont pas générés égaux en phase auxdits pemiers signaux correspondants.

9. Méthode selon une des revendications précédentes, characterisée en ce que lesdits moyens d'évaluation sont aménagés dans ledit premier objet.

10. Méthode selon une des revendications précédentes, characterisée en ce que l'étape e) est effectuée au ou dans ledit premier objet.

11. Méthode selon une des revendications précédentes, characterisée en ce qu' au moins une amplitude avec laquelle un premier signal est reçu au deuxième objet et/ou avec laquelle un deuxième signal est reçu au premier objet est transmise auxdits moyens d'évaluation.

12. Méthode selon une des revendications précédentes, characterisée en ce que la transmission aux moyens d'évaluation est éffectuée indépendemment dudit premier et dudit deuxième signal et, particulièrement, est éffectuée par des ondes électromagnétiques.

13. Méthode selon une des revendications précédentes, characterisée en ce que la première fréquence est inégale à la deuxième fréquence respectivement.

14. Méthode selon une des revendications précédentes, characterisée en ce que les premières fréquences et les deuxièmes fréquences se situent à l'intérieur de l'intervalle de fréquence de 2000 MHz à 3000 MHz ou de 4 GHz à 6 GHz, particulièrement à l'intérieure de 2400 MHz à 2483,5 MHz ou de 4,900 GHz à 5,875 GHz.

15. Dispositif comprenant un premier et un deuxième objet ainsi qu'au moins un moyen d'évaluation, ces dits objets respectivement comprenant des moyens pour émettre et recevoir des ondes électromagnétiques, et des dispositifs de contrôle pour effectuer une méthode selon une des revendications 1 à 14, ainsi que des moyens pour la transmission des résultats de mesure ou de calculation à être transmis aux moyens d'évaluation selon la méthode.
